# EUROPEAN PATENT SPECIFICATION

(11) **EP 0 612 685 B1**
(45) Date of publication and mention of the grant of the patent: **11.12.1996**
(21) Application number: 94200267.6
(22) Date of filing: 02.02.1994
(51) Int. Cl.: C01B 11/02, C25B 1/46

(54) **Process for producing chlorine dioxide**
Verfahren zur Herstellung von Chlordioxid
Procédé pour la production du dioxyde de chlore

(30) Priority: 26.02.1993 US 23561; 02.07.1993 SE 9302279
(43) Date of publication of application: 31.08.1994
(73) Proprietor: Eka Chemicals AB, 445 80 Bohus (SE)
(72) Inventor: Falgén, Helena, S-856 53 Sundsvall (SE); Sundström, Göran, S-854 62 Sundsvall (SE); Landfors, Johan, S-854 67 Sundsvall (SE); Sokol, John C., Marietta, GA 30064 (US)
(74) Representative: Jönsson, Christer

(56) References cited:
- EP-A- 0 353 367
- US-A- 4 129 484

## Description

The present invention relates to a process of producing chlorine dioxide. The process comprises reducing chlorate in an acidic reaction medium and circulating generator solution between a chlorine dioxide generator and an electrochemical cell. The process is performed without crystallisation of sulfate and without formation of any solid by-products.

Chlorine dioxide used in aqueous solution is of considerable commercial interest, mainly in pulp bleaching, but also in water purification, fat bleaching, removal of phenols from industrial wastes etc. It is therefore desirable to provide processes in which chlorine dioxide can be efficiently produced.

There are numerous different processes for chlorine dioxide production. Most processes in commercial use involves reaction of sodium chlorate in an acidic medium with a reducing agent such as hydrogen peroxide, methanol, chloride ions or sulfur dioxide. The acidity is generally provided by sulfuric acid. A drawback of the known processes is the formation of some form of sodium sulfate as a by-product which has to be removed from the reactor, either in the form of a solid saltcake or as waste acid. Most modern processes are operated under subatmospheric pressure, involving precipitation of the sodium sulfate as a saltcake which has to be removed from the reactor by filtering. Today it is hard to find any use for the salt cake and it is normally regarded as an unwanted by-product.

In order to avoid formation of a sulfate by-product, it has been disclosed to provide all acid needed for the chlorine dioxide generation from chloric acid which can be prepared electrochemically from sodium chlorate. Such methods are described in, for example, the US patents 4915927, 5084148 and 5174868. However, it has been found difficult to achieve satisfactory current efficiency in production of strong chloric acid which is desirable in order provide efficient chlorine dioxide generation.

US patent 4806215 discloses a process in which chlorine dioxide is generated from sodium chlorate and hydrochloric acid, in which process the generator liquor is acidified electrochemically and recycled back to the reactor. However, this process necessarily results in co-formation of chlorine which cannot be accepted in modern environmental friendly bleaching processes.

US patent 4129484 discloses a process of producing chlorine dioxide in which process sulfuric acid and sodium hydrogen sulfate is withdrawn from the reactor and subjected to electrolysis. However, the current efficiency obtained in the electrochemical cell is not satisfactory.

US patents 5198080 and 5122240 disclose a process of producing chlorine dioxide involving crystallisation and withdrawal of solid sodium sesquisulfate and optionally sodium chlorate. The solid salt is dissolved again, electrolytically acidified and recycled to the chlorine dioxide reactor. Since the process involves handling of solid material it is fairly complicated. Further, the sulfate solution obtained by dissolving the solid sesquisulfate is fairly diluted.

The object of the present invention is to provide an efficient process of producing chlorine dioxide without formation of undesired by-products, particularly alkali metal sulfate. It is another object to provide a process in which valuable by products are formed, particularly alkali metal hydroxide, but also hydrogen gas and oxygen gas.

The present invention concerns a process of producing chlorine dioxide comprising the steps: Providing a reactor with an aqueous acidic reaction medium containing alkali metal chlorate and sulfate, wherein the concentration of sulfate exceeds about 3 moles/liter but is less than saturation; reducing chlorate ions in said reaction medium to form chlorine dioxide; withdrawing chlorine dioxide gas from the reaction medium; withdrawing reaction medium from the reactor and transferring it to an electrochemical cell; electrolysing said reaction medium to increase the acidity and decrease the content of alkali metal ions; recycling the acidified reaction medium to the reactor; adding make up alkali metal chlorate to the reaction medium before or after the electrochemical cell; wherein the process is performed substantially without crystallisation of sulfate or chlorate.

It is to be understood that the reaction medium leaving the chlorine dioxide reactor has substantially the same composition as it has within the reactor. The alkali metal referred to in the present description could be any alkali metal such as sodium or potassium. Normally, sodium is preferred. The reactor for generation of chlorine dioxide can be of any known type, such as SVP®, Mathieson and others, the reactor however being operated without crystallisation.

It has been found that if the aqueous reaction medium is transferred directly to the electrochemical cell, without any intermediate crystallisation, it is possible to maintain a high content of sulfate during the electrolysis. It has also been found that the current efficiency during the electrolysis increases with the sulfate content of the reaction medium. Preferably the sulfate content exceeds about 4 moles/liter. The upper limit is determined by the concentration at saturation which is dependent on several parameters, particularly the acidity. For instance, if the reaction medium has an acidity at about 4 N, alkali metal sulfate starts crystallising at about 5 moles/liter, and if the acidity is about 6.5 N, the sulfate crystallises at about 6.5 moles/liter. Most preferably, the process is operated at a sulfate concentration just below saturation.

It has also been found that the current efficiency during the electrolysis is improved if the molar ratio H⁺:SO₄²⁻ is low. However, also the solubility of sulfate decreases with the above ratio. Further, the production rate of chlorine dioxide is improved if the acidity is high. The preferred content of H⁺ in the reaction medium is from about 1.5 to about 11 moles/liter, most preferably from about 3 to about 9 moles/liter. In order to obtain high efficiency both for the chlorine dioxide generation and the electrochemical acidification, it has been found that the optimal molar ratio H⁺:SO₄²⁻ suitably is from about 0.5 to about 1.5, preferably from about 0.7 to about 1.3.

In the reactor, the chlorate ions can be reduced by a reducing agent which is most preferred, but also electro-chemical reduction is possible. Suitably, a reducing agent is added to the reaction medium, which reducing agent can be selected from organic substances such as methanol, ethanol, isopropanol, other alcohols or formaldehyde, or from inorganic substances such a hydrogen peroxide or chloride ions. Also mixtures of different reducing agents can be used. Hydrogen peroxide and methanol are the most preferred reducing agents since they offer the possibility of efficiently producing chlorine dioxide substantially without formation of chlorine. A particular advantage of using hydrogen peroxide is that high production rate can be achieved at low acidities, for example from about 2 to about 5 N, and that no by products that may damage the electrochemical cell are produced.

The chlorine dioxide producing reactions are favoured by the addition of small amounts of catalysts to the reactor. Preferred catalysts belong to the groups VB - VIII, IB, IVA and VIIA of the Periodic Table of the elements. High activity can be achieved by compounds containing V, Nb, Cr, Mn, Fe, Ru, Os, Ni, Pd, Pt, Cu, Ag, Ge, Sn, Pb, Br, and I, either separate or in combinations.

Although not necessary, it is possible to add small amounts of chloride ions, preferably in the form of alkali metal chloride, so as to maintain the concentration thereof in the reaction medium within the range from about 0.001 up to about 0.8 moles/liter.

Although chlorine dioxide generation under atmospheric pressure is possible, it is advantageous if the reaction medium is maintained under subatmospheric pressure in the reactor, enabling higher concentration of chlorine dioxide without risk for explosion and also improving the yield. However, contrary to conventional subatmospheric processes for chlorine dioxide production, no sulfate is crystallised. Suitably, the absolute pressure is maintained from about 60 to about 600 mm Hg, preferably from about 60 to about 400 mm Hg, most preferably from about 75 to about 350 mm Hg. However, it is preferred to operate the electrochemical cell at atmospheric pressure, since pressure fluctuations in the different chambers may damage the membranes.

The temperature in the electrochemical cell is suitable maintained at substantially the same temperature as in the reactor.

Any suitable electrochemical cell enabling acidification of the reaction medium can be used. Normally, a cell comprising an anode compartment and a cathode compartment divided by at least one ion selective membrane is best suitable. In addition to an anode- and a cathode compartment, such a cell may comprise one or several compartments in the middle. Any standard type of electrodes can be used. For instance, the anode can be DSA O₂™ and the cathode can be Ni. Also gas electrodes such as Hydrina™ can be used. Further, standard polymeric ion-exchange membranes can be used, but also high ion conducting membranes such as ceramic membranes can be useful. Normally, it is possible to achieve a current efficiency of more than about 70%, or even more than about 80%.

In one preferred embodiment, the reaction medium to be acidified is supplied to the middle compartment of a three chamber cell comprising two cation-exchange membranes. Preferably, water or an aqueous solution containing sulfuric acid is supplied to the anode compartment and water or an aqueous solution containing alkali metal hydroxide is supplied to the cathode compartment. In such a cell, hydrogen ions are generated in the anode compartment and passed through the membrane into the middle compartment replacing alkali metal ions passed into the cathode compartment. In the anode compartment oxygen gas is produced, while hydrogen gas and hydroxide ions are produced in the cathode compartment. The advantage of this embodiment is that substances that may be present in the reaction medium, such as chlorate, chloride ions and methanol, are not so easily oxidised on the anode, thus avoiding formation of perchlorate, chlorine and formic acid. Further, the life-time of the anode is increased.

It is also possible to perform the electrolysis in electrochemical cells known per se, for example from the already mentioned US patent 4229487. Thus, it is possible to use a three chamber cell in which the middle compartment is defined by an anion exchange membrane and a cation exchange membrane, entering the reaction medium into the middle compartment, passing chlorate ions and sulfate ions through an anion-exchange membrane into the anode compartment, and withdrawing acidified reaction medium therefrom. Further, a two chamber cell divided by an cation-exchange membrane could be used, acidifying the reaction medium in the anode compartment and passing alkali metal ions through the cation-exchange membrane into the cathode compartment. In these cases, it is also possible to produce alkali metal hydroxide, hydrogen gas and oxygen gas as valuable by-products. It is also possible to use a two chamber cell divided by a anion-exchange membrane. The main advantage of using a two chamber cell is that the investment costs are lower.

As earlier mentioned, high acidity in the chlorine dioxide reactor favours the production rate. On the other hand, high acidity in the electrochemical cell causes the current efficiency to decrease. In order to achieve both effective chlorine dioxide production and high current efficiency, a preferred embodiment of the invention comprises the steps of: recirculating reaction medium from the reactor in a first circulation loop, preferably comprising a heater; withdrawing a portion of the reaction medium from the first loop and transferring it to a second circulation loop comprising the electrochemical cell; and withdrawing a portion of the medium from the second loop and transferring it to the first loop. Since the medium is acidified in the electrochemical cell, while acid is consumed in the chlorine dioxide reactor, the acidity in the second loop is normally slightly higher than in the first loop. However, the difference in acidity in the two loops should preferably be as low as possible, suitably less than about 0.5 N, preferably less than about 0.3 N, most preferably less than about 0.1 N. It is fully possible to operate the system with substantially the same acidity in the two loops at steady state.

The method according to the invention can be performed substantially without removing any chlorate or sulfate from the system. Substantially all chlorate supplied is transformed to chlorine dioxide, i.e. the main product. The alkali metal supplied can be withdrawn from the system as alkali metal hydroxide, a valuable by product. Sulfate is neither added nor withdrawn, but is circulating as a dead load, improving the efficiency of the electrochemical acidification of the reaction medium. Thus, it has been found possible to provide a method of producing chlorine dioxide from alkali metal chlorate without formation of by products other than valuable substances such as alkali metal hydroxide, hydrogen gas and oxygen gas. Moreover, since no sulfate is crystallised, there is no need for a filter for removing any salt cake which saves a considerable amount of investment costs. Further, it is easy to make the process work continuously at steady state. Another advantage of the invention, is that only a small amount of water has to be added to the system, thus decreasing the amount that has to be heated and withdrawn by evaporation. Normally, water is only added to the system as a solvent for the make up alkali metal chlorate and the reducing agent. Furthermore, each alkali metal ions passing the membrane in the electrochemical cell, brings a couple of water molecules, thus further decreasing the amount of water to be evaporated.

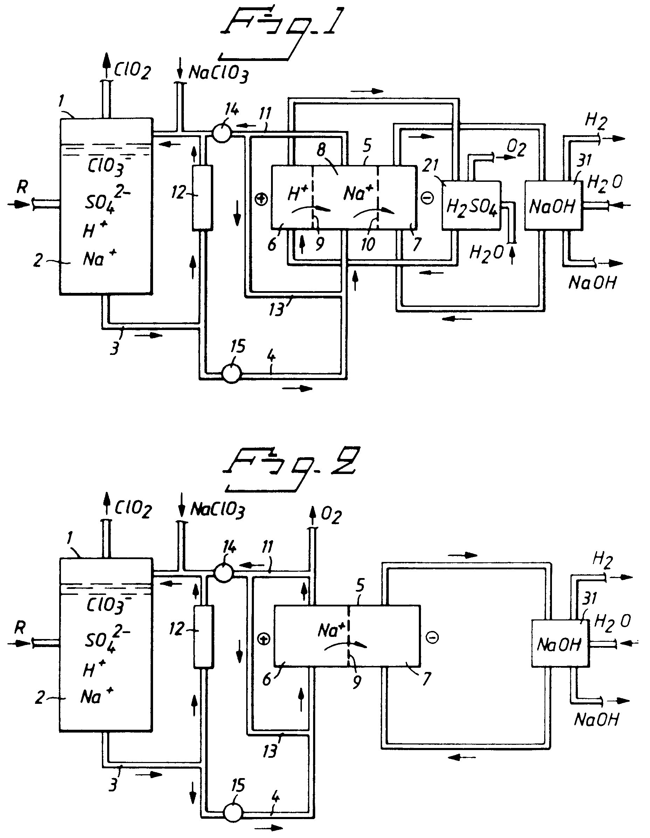

The invention will now be described more in detail with reference to the drawings. The Figures 1 and 2 schematically show two different embodiments of the invention. The invention is, however, not restricted to what is described below, and it is apparent to those skilled in the art that many other embodiments can be employed within the scope of the claims.

Referring to Figure 1, a preferred system for producing chlorine dioxide comprises an SVP®-reactor 1 containing an aqueous reaction medium 2. In the reaction medium 2 chlorate ions, sulfate ions, hydrogen ions and sodium ions are present. A reducing agent R, preferably methanol or hydrogen peroxide, is supplied to the reaction medium while chlorine dioxide generated in the reaction medium 1 is withdrawn as a gas together with evaporated water diluting the chlorine dioxide to a safe concentration. In the reactor 1, the absolute pressure is preferably from about 75 to about 400 mm Hg and the temperature is preferably from about 50 to about 85°C. If methanol is used as the reducing agent R, the reaction medium 2 preferably contains chlorate in a concentration just below saturation, normally from about 4 to about 5 moles/liter. Further, it preferably contains from about 6 to about 7 moles/liter of sulfate, from about 10 to about 12 moles/liter of sodium, and has an acidity from about 6 to about 7 N. If hydrogen peroxide is used as the reducing agent, the chlorate content of the reaction medium 2 is preferably just below saturation, normally from about 4 to about 5 moles/liter. Further, it preferably contains from about 4 to about 5 moles/liter of sulfate, from about 8 to about 10 moles/liter of sodium and has an acidity from about 4 to about 5 N. The reaction medium 2 is continuously circulating through line 3 and a heater 12. Part of the circulating reaction medium is withdrawn from line 3 to line 4 and transferred to the central compartment 8 of a three chamber cell 5 comprising two cation-exchange membranes 9, 10. In the cell 5, the anode compartment 6 is supplied with sulfuric acid from a tank 21 and the cathode compartment 7 is supplied with sodium hydroxide from a tank 31. In the anode compartment 6, hydrogen ions are generated and passed through the membrane 9 into the central compartment 8. Sodium ions from the reaction medium in the central compartment 7 are passed through the membrane 10 into the cathode compartment. The electrochemical reactions result in acidification of the reaction medium in the central compartment 8, generation of oxygen gas in the anode compartment, and generation of sodium hydroxide and hydrogen gas in the cathode compartment. The acidified reaction medium is withdrawn from the middle compartment 8 of the cell 5 through line 11, mixed with the reaction medium from the heater 12 and with an aqueous solution of make up sodium chlorate, and then recycled back to the reactor 1. A portion of it is preferably recycled back to the cell 5 through line 13. Such a system thus comprises two circulation loops for the reaction medium, a first loop including the reactor 1, line 3 and the heater 12, a second loop including the cell 5 and line 13. The difference in acidity of the medium in the two loops should be as low as possible. In the tank 21, oxygen is withdrawn and water is added to the anolyte. The electrochemical cell 5 is operated under atmospheric pressure and the connections between the cell 5 and the reactor 1 is therefore provided with means 14, 15 for altering the pressure of the reaction medium, which means 15, 16, for example, can include ordinary pumps. Alternatively, the chlorine dioxide reactor 1 can be placed at a higher level than the cell 5, the pressure thus being altered by the gravity force. In the tank 31, hydrogen and sodium hydroxide are withdrawn and water is added to the catholyte.

Referring to Figure 2, another preferred embodiment for producing chlorine dioxide is shown. The system is similar to the one shown in Figure 1, except that the electrochemical cell 5 only consist of two chambers 6, 7 divided by a cation-exchange membrane 9. The chlorine dioxide reactor 1 and the catholyte system 7, 31 are operated as in Figure 1. The reaction medium to be acidified is transferred through line 4 to the anode compartment 6 of the cell 5, in which compartment 6 hydrogen ions and oxygen gas are generated. Sodium ions are passed through the cation-exchange membrane 9 into the cathode compartment 7 in which hydroxide ions and hydrogen gas are generated. The portion of the acidified reaction medium withdrawn from the anode compartment 6 not recycled back to the cell 5 through line 13 is transferred to the chlorine dioxide reactor 1 in the same manner as in Figure 1, implying that also the two circulation loops for the reaction medium work out as in the embodiment of Figure 1. Accordingly, chlorine dioxide, sodium hydroxide, hydrogen gas and oxygen gas are produced as in the system described in Figure 1.

The following Examples are intended to describe some specific ways of operating the process of the invention but should not be interpreted as limiting its scope.
Example 1: A 3 litre chlorine dioxide reactor was connected to a three chamber MP-cell™ (Electrocell AB, Sweden), forming a system as described in Figure 1 with a total volume of 5 litre. The system was charged with 5 liter of an aqueous solution consisting of 5.4 moles/liter H⁺, 5.4 moles/liter SO₄²⁻, 1.9 moles/liter ClO₃⁻ and 7.3 moles/liter Na⁺. The anolyte was maintained constant at 100 g/l sulfuric acid by addition of water, and the catholyte was maintained constant at 140 g/l sodium hydroxide by withdrawing sodium hydroxide and feeding water. The chlorine dioxide generator was operating a 60°C and 150 mm Hg, and the cell was operating at the same temperature but at atmospheric pressure. Methanol was used as reducing agent and the system was fed with a 545 g/l sodium chlorate solution. The cell was operating at a current of 30 A, corresponding to a current density of 3 kA/m², and the system was operating at steady state conditions for 5 hours. The current efficiency for sodium hydroxide production was 67% and the gram atom efficiency for chlorine dioxide production was 100%.
Example 2: A 3 litre chlorine dioxide reactor was connected to a three chamber MP-cell™ (Electrocell AB, Sweden), forming a system as described in Figure 1 with a total volume of 5 litre. The system was charged with 5 liter of an aqueous solution consisting of 3.2 moles/liter H⁺, 3.35 moles/liter SO₄²⁻, 3.3 moles/liter ClO₃⁻ and 6.8 moles/liter Na⁺. The anolyte was maintained constant at 100 g/l sulfuric acid by addition of water, and the catholyte was maintained constant at 140 g/l sodium hydroxide by withdrawing sodium hydroxide and feeding water. The chlorine dioxide generator was operating a 65°C and 195 mm Hg, and the cell was operating at the same temperature but at atmospheric pressure. Hydrogen peroxide was used as reducing agent and the system was fed with a 530 g/l sodium chlorate solution. The cell was operating at a current of 30 A, corresponding to a current density of 3 kA/m², and the system was operating at steady state conditions for 8 hours. The current efficiency for sodium hydroxide production was 71% and the gram atom efficiency for chlorine dioxide production was 100%.
Example 3: A 3 litre chlorine dioxide reactor was connected to a two chamber MP-cell™ (Electrocell AB, Sweden), forming a system as described in Figure 2 with a total volume of 5 litre. The system was charged with 5 liter of an aqueous solution consisting of 6 moles/liter H⁺, 6 moles/liter SO₄²⁻, 2 moles/liter ClO₃⁻ and 8 moles/liter Na⁺. The catholyte was maintained constant at 140 g/l sodium hydroxide by withdrawing sodium hydroxide and feeding water. The chlorine dioxide generator was operating a 60°C and 150 mm Hg, and the cell was operating at the same temperature but at atmospheric pressure. Methanol was used as reducing agent and the system was fed with a 545 g/l sodium chlorate solution. The cell was operating at a current of 30 A, corresponding to a current density of 3 kA/m², and the system was operating at steady state conditions for 8 hours. The current efficiency for sodium hydroxide production was 66% and the gram atom efficiency for chlorine dioxide production was 100%.
Example 4: A 3 litre chlorine dioxide reactor was connected to a three chamber MP-cell™ (Electrocell AB, Sweden), forming a system as described in Figure 2 with a total volume of 5 litre. The system was charged with 5 liter of an aqueous solution consisting of 4 moles/liter H⁺, 4 moles/liter SO₄²⁻, 2.2 moles/liter ClO₃⁻ and 6.2 moles/liter Na⁺. The catholyte was maintained constant at 140 g/l sodium hydroxide by withdrawing sodium hydroxide and feeding water. The chlorine dioxide generator was operating a 65°C and 195 mm Hg, and the cell was operating at the same temperature but at atmospheric pressure. Hydrogen peroxide was used as reducing agent and the system was fed with a 530 g/l sodium chlorate solution. The cell was operating at a current of 30 A, corresponding to a current density of 3 kA/m², and the system was operating at steady state conditions for 8 hours. The current efficiency for sodium hydroxide production was 70% and the gram atom efficiency for chlorine dioxide production was 100%.

## Claims

1. A process of producing chlorine dioxide, **characterised** in that it comprises the steps: Providing a reactor with an aqueous acidic reaction medium containing alkali metal chlorate and sulfate, wherein the concentration of sulfate exceeds about 3 moles/liter but is less than saturation; reducing chlorate ions in said reaction medium to form chlorine dioxide; withdrawing chlorine dioxide gas from the reaction medium; withdrawing reaction medium from the reactor and transferring it to an electrochemical cell; electrolysing said reaction medium to increase the acidity and decrease the content of alkali metal ions; recycling the acidified reaction medium to the reactor; adding make up alkali metal chlorate to the reaction medium before or after the electrochemical cell; wherein the process is performed substantially without crystallisation of sulfate or chlorate.

2. A process as claimed in claim 1, wherein the content of sulfate in the reaction medium exceeds about 4 moles/liter.

3. A process as claimed in any one of the claims 1-2, wherein the molar ratio H⁺:SO₄²⁻ in the reaction medium is from about 0.5 to about 1.5.

4. A process as claimed in any one of the claims 1-3, wherein the absolute pressure in the chlorine dioxide producing reactor is maintained from about 60 to about 400 mm Hg.

5. A process as claimed in any one of the claims 1-4, wherein the electrochemical cell is operated under atmospheric pressure.

6. A process as claimed in any one of the claims 1-5, wherein a reducing agent is added to the reaction medium.

7. A process as claimed in claim 6, wherein the reducing agent is selected from methanol or hydrogen peroxide.

8. A process as claimed in any one of the claims 1-7, wherein the process comprises the steps of: recirculating reaction medium from the reactor in a first circulation loop; withdrawing a portion of the reaction medium from the first loop and transferring it to a second circulation loop comprising the electrochemical cell; and withdrawing a portion of the medium from the second loop and transferring it to the first loop.

9. A process as claimed in claim 8, wherein the difference in acidity between the two loops is less than about 0.5 N.

10. A process as claimed in any one of the claims 1-9, wherein the process is performed substantially without removing any chlorate or sulfate from the system.

## Patentansprüche

1. Verfahren zur Herstellung von Chlordioxid, dadurch gekennzeichnet, daß es die folgenden Schritte umfaßt: Versehen eines Reaktors mit einem wässerigen, sauren Reaktionsmedium, das Alkalimetallchlorat und Sulfate enthält, wobei die Konzentration des Sulfats über etwa 3 Mol/Liter, aber unter der Sättigung liegt; Reduzieren der Chlorationen in diesem Reaktionsmedium, um Chlordioxid zu bilden; Abziehen des Chlordioxidgases aus dem Reaktionsmedium; Abziehen des Reaktionsmediums aus dem Reaktor und Überführen in eine elektrochemische Zelle; Durchführen der Elektrolyse des Reaktionsmediums, um seine Acidität zu erhöhen und den Gehalt an Alkalimetallionen zu reduzieren; Rückführen des angesäuerten Reaktionsmediums in den Reaktor; Zufuhr verbrauchten Alkalimetallchlorats zum Reaktionsmedium vor oder nach der elektrochemischen Zelle; wobei das Verfahren im wesentlichen ohne Auskristallisation von Sulfat oder Chlorat durchgeführt wird.

2. Verfahren nach Anspruch 1, wobei der Sulfatgehalt im Reaktionsmedium über etwa 4 Mol/Liter liegt.

3. Verfahren nach einem der Ansprüche 1-2, wobei das Mol-Verhältnis H⁺:SO₄²⁻ im Reaktionsmedium zwischen etwa 0,5 und etwa 1,5 liegt.

4. Verfahren nach einem der Ansprüche 1-3, wobei der Absolutdruck im Chlordioxid produzierenden Reaktor zwischen etwa 60 und etwa 400 mm Hg gehalten wird.

5. Verfahren nach einem der Ansprüche 1-4, wobei die elektrochemische Zelle unter Atmosphärendruck betrieben wird.

6. Verfahren nach einem der Ansprüche 1-5, wobei dem Reaktionsmedium ein Reduktionsmittel zugesetzt wird.

7. Verfahren nach Anspruch 6, wobei das Reduktionsmittel Methanol oder Wasserstoffperoxid ist.

8. Verfahren nach einem der Ansprüche 1-7, wobei das Verfahren die folgenden Schritte umfaßt: Rückführen des Reaktionsmediums vom Reaktor in einer ersten Zirkulationsschleife; Abziehen eines Teiles des Reaktionsmediums aus der ersten Schleife und Überführen in eine zweite Zirkulationsschleife, die die elektrochemische Zelle enthält; und Abziehen eines Teiles des Mediums aus der zweiten Schleife und Überführen in die erste Schleife.

9. Verfahren nach Anspruch 8, in dem der Unterschied in der Acidität zwischen den beiden Schleifen kleiner als etwa 0,5 N ist.

10. Verfahren nach einem der Ansprüche 1-9, wobei das Verfahren im wesentlichen ohne Entnahme irgendeines Chlorats oder Sulfats aus dem System erfolgt.

## Revendications

1. Procédé pour la production du dioxyde de chlore, caractérisé par le fait qu'il comprend les étapes suivantes :
placer dans un réacteur un milieu réactionnel acide aqueux contenant un chlorate de métal alcalin et un sulfate de métal alcalin, la concentration du sulfate étant supérieure à environ 3 moles/litre mais inférieure à la saturation ; réduire les ions chlorate dans ledit milieu réactionnel afin de former du dioxyde de chlore; retirer le dioxyde de chlore gazeux du milieu réactionnel; retirer le milieu réactionnel du réacteur et le transférer dans une pile électrochimique; électrolyser ledit milieu réactionnel afin d'augmenter l'acidité et diminuer la teneur en ions métalliques alcalins; recycler le milieu réactionnel acidifié au réacteur; compléter le chlorate de métal alcalin dans le milieu réactionnel avant ou après la pile électrochimique; ce procédé étant mis en oeuvre pratiquement sans cristallisation de sulfate ou de chlorate.

2. Procédé selon la revendication 1, la teneur en sulfate dans le milieu réactionnel dépassant environ 4 moles/litre.

3. Procédé selon la revendication 1 ou 2, où le rapport molaire H⁺:SO₄²⁻ dans le milieu réactionnel étant compris entre environ 0,5 et environ 1,5.

4. Procédé selon l'une quelconque des revendications 1 à 3, où on maintient la pression absolue dans le réacteur produisant le dioxyde de chlore entre environ 60 et environ 400 mm Hg.

5. Procédé selon l'une quelconque des revendications 1 à 4, où la pile électrochimique fonctionne sous la pression atmosphérique.

6. Procédé selon l'une quelconque des revendications 1 à 5, où on ajoute un agent réducteur au milieu réactionnel.

7. Procédé selon la revendication 6, où on choisit l'agent réducteur parmi le méthanol et le peroxyde d'hydrogène.

8. Procédé selon l'une quelconque des revendications 1 à 7, ce procédé comportant les étapes suivantes : recyclage du milieu réactionnel du réacteur dans une première boucle de circulation; retrait d'une partie du milieu réactionnel de la première boucle et son transfert à une seconde boucle de circulation comprenant la pile électrochimique; et retrait d'une partie du milieu de la seconde boucle et son transfert à la première boucle.

9. Procédé selon la revendication 8, où la différence en acidité entre les deux boucles est inférieure à environ 0,5 N.

10. Procédé selon l'une quelconque des revendications 1 à 9, où le procédé est mis en oeuvre pratiquement sans retrait de chlorate ou de sulfate du système.
